# EUROPEAN PATENT SPECIFICATION

(11) **EP 3 270 639 B1**
(45) Date of publication and mention of the grant of the patent: **19.06.2019**
(21) Application number: 15888117.7
(22) Date of filing: 07.04.2015
(51) Int. Cl.: H04W 48/16, H04W 48/02, H04W 48/08

(54) **ACCESS PROCESSING METHOD AND DEVICE**
ZUGANGSVERARBEITUNGSVERFAHREN UND -VORRICHTUNG
PROCÉDÉ ET DISPOSITIF DE TRAITEMENT D'ACCÈS

(43) Date of publication of application: 17.01.2018
(73) Proprietor: Huawei Technologies Co., Ltd., Longgang District Shenzhen, Guangdong 518129 (CN)
(72) Inventor: ZHANG, Xiuping, Shenzhen Guangdong 518129 (CN); CHANG, Te-chin, Shenzhen Guangdong 518129 (CN); DENG, Weihua, Shenzhen Guangdong 518129 (CN)
(74) Representative: Epping - Hermann - Fischer
(86) International application number: PCT/CN2015/076010
(87) International publication number: WO 2016/161560

(56) References cited:
- EP-A1- 2 785 093
- CN-A- 101 867 963
- CN-A- 102 685 845
- CN-A- 103 379 480
- US-A1- 2010 172 297
- US-A1- 2013 130 738
- US-A1- 2013 143 548
- US-A1- 2013 235 861

## Description

### TECHNICAL FIELD

The present invention relates to the field of wireless network technologies, and in particular, to an access processing method and apparatus.

### BACKGROUND

In a wireless network (Wireless Network, Wi-Fi), a terminal accesses a network by using a network access point (Access Point, AP). Each time before the terminal enables Wi-Fi and accesses a network by using an AP, the terminal needs to perform network access detection to check whether the AP can access the network. If a detection result is that the AP can access the network, the terminal accesses the network by using the AP. If a detection result is that the AP cannot access the network, the terminal searches for another AP. In actual application, to provide relatively good experience for a user and reduce network access time, before performing network access detection, the terminal automatically filters out an AP that is determined incapable of accessing a network, that is, automatic network access detection is not performed subsequently on an AP that is determined incapable of accessing a network, unless the user manually taps to access the AP. In the prior art, a method used by a terminal to filter out an AP that is determined incapable of accessing a network is: obtaining a detection result for the AP in previous network access detection, and if the AP cannot access a network previously, determining that the AP cannot access a network and automatically filtering out the AP so that the AP is not automatically accessed subsequently any more. If the AP can access a network previously, the AP is automatically accessed and network access detection is performed.

However, usually because of network congestion or terminal hardware stability, a small probability of erroneous determining also exists in network access detection, that is, an AP that can access a network is detected as an AP that cannot access a network. According to the prior art, an AP filtering manner of considering only a previous network access detection result may cause a filtering error, because if the AP is erroneously determined in previous network access detection, the terminal does not automatically access the AP subsequently any more. As a result, the AP that can access a network is filtered out forever, leading to extremely low accuracy of network access detection and affecting user experience.

US 2013/0143548 A1 discloses a method for a user equipment comprising the steps: receiving data from a cell in a wireless network; if reading of the data is unsuccessful, determining a signal quality metric for a signal received from the cell; and when reading of the data is unsuccessful and when the signal quality metric meets a criterion, initiating a procedure associated with cells for which reading of the data is unsuccessful.

US 2013/0235861 A1 discloses techniques for performing WLAN system scanning and selection are described. A terminal performs multiple iterations of scan to detect for WLAN systems. A scan list containing at least one WLAN system to detect for is initially determined. For each scan iteration, a scan type may be selected from among the supported scan types.

### SUMMARY

Embodiments of the present invention provide a network access processing method according to independent claim 1, a network access processing apparatus according to independent claim 6, a computer-readable storage medium according to independent claim 12 and a computer program product according to independent claim 13.

A first aspect of the present invention provides a network access processing method including: :performing a network access detection on a target AP comprising determining whether the target AP is capable of accessing the network; when it is detected that the target network access point cannot access a network in the previous network access detection that is closest to a current moment, obtaining a network access detection result information of the target network access point before the previous network access detection that is closest to the current moment; analyzing the network access detection result information to determine whether the target network access point has a network access capability by determining that a percentage of successful record entries in the network access detection result information is above a preset threshold; and if the target network access point has the network access capability, automatically accessing the target network access point, and detecting whether the target network access point can currently access the network.

Based on the first aspect, in a first feasible implementation manner, the network access information includes at least one network access detection record entry before the previous network access detection, and the network access detection record entry is a successful record entry or an unsuccessful record entry.

Based on the first feasible implementation manner of the first aspect, in a second feasible implementation manner, the analyzing the network access information to determine whether the target network access point has a network access capability includes:
determining whether the network access information includes an unsuccessful record entry; and
if the network access information does not include an unsuccessful record entry, determining that the target network access point has the network access capability.

Based on the second feasible implementation manner of the first aspect, in a third feasible implementation manner, after the determining whether the network access information includes an unsuccessful record entry, the method further includes:
if the network access information includes an unsuccessful record entry, obtaining, in the network access information, a preset quantity of network access detection record entries that are adjacent to the previous network access detection; and
if the preset quantity of network access detection record entries are all successful record entries, determining that the target network access point has the network access capability. Based on the third feasible implementation manner of the first aspect, in a fourth feasible implementation manner, after the obtaining, in the network access information, a preset quantity of network access detection record entries that are adjacent to the previous network access detection, the method further includes:
   if the preset quantity of network access detection record entries include an unsuccessful record entry, counting a percentage of a successful record entry in the network access information; and
   if the percentage is greater than a preset threshold, determining that the target network access point has the network access capability.

A second aspect of the present invention provides a network access processing apparatus, comprising: an obtaining module configured to perform a network access detection on a target AP comprising determining whether the target AP is capable of accessing the network; and. when it is detected that die target network access point cannot access a network in the previous network access detection that is closest to a current moment, obtain network access detection result information of the target network access point before the previous network access detection; an analysis module configured to analyze the network access detection result information to determine whether the target network access point has a network access capability by determining that a percentage of successful record entries in the network access detection result information is above a preset threshold; and a detection module, configured to: if the target network access point has the network access capability, automatically access the target network access point, and detect whether the target network access point can access the network.

Based on the second aspect, in a first feasible implementation manner, the network access information includes at least one network access detection record entry before the previous network access detection, and the network access detection record entry is a successful record entry or an unsuccessful record entry.

Based on the first feasible implementation manner of the second aspect, in a second feasible implementation manner, the analysis module includes:
a judging unit, configured to determine whether the network access information includes an unsuccessful record entry; and
a first determining unit, configured to: if the network access information does not include an unsuccessful record entry, determine that the target network access point has the network access capability.

Based on the second feasible implementation manner of the second aspect, in a third feasible implementation manner, the analysis module further includes:
an obtaining unit, configured to: if the network access information includes an unsuccessful record entry, obtain, in the network access information, a preset quantity of network access detection record entries that are adjacent to the previous network access detection; and
a second determining unit, configured to: if the preset quantity of network access detection record entries are all successful record entries, determine that the target network access point has the network access capability.

Based on the third feasible implementation manner of the second aspect, in a fourth feasible implementation manner, the analysis module further includes:
a counting unit, configured to: if the preset quantity of network access detection record entries include an unsuccessful record entry, count a percentage of a successful record entry in the network access information; and
a third determining unit, configured to: if the percentage is greater than a preset threshold, determine that the target network access point has the network access capability.

In the embodiments of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can currently access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of an access processing method according to an embodiment of the present invention;
FIG. 2A and FIG. 2B are a schematic flowchart of another access processing method according to an embodiment of the present invention;
FIG. 3 is a schematic diagram of a network access detection record entry according to an embodiment of the present invention;
FIG. 4 is a schematic structural diagram of an access processing apparatus according to an embodiment of the present invention;
FIG. 5 is a schematic structural diagram of an analysis module according to an embodiment of the present invention; and
FIG. 6 is a schematic structural diagram of another access processing apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

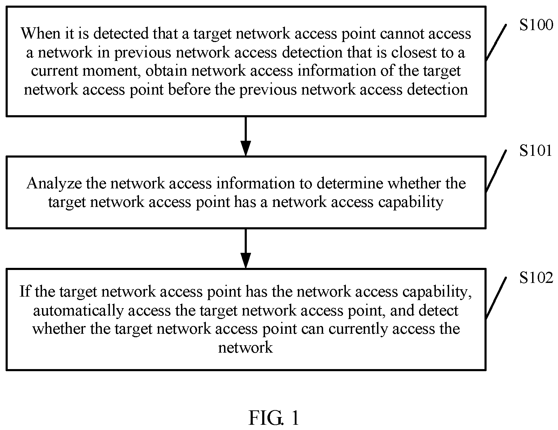

Referring to FIG. 1, FIG. 1 is a schematic flowchart of an access processing method according to an embodiment of the present invention. As shown in FIG. 1, the access processing method in this embodiment includes steps S100 to S102.

S100. When it is detected that a target network access point cannot access a network in previous network access detection that is closest to a current moment, obtain network access information of the target network access point before the previous network access detection.

In this embodiment of the present invention, a target AP may be any AP for which a terminal pre-stores an AP identifier. Before accessing a network by using the target AP, the terminal needs to perform network access detection on the target AP, that is, detect whether the target AP can access a network. When it is detected that the target AP cannot access a network, the terminal searches for another AP in a preset distance range, or if the target AP can access a network, the terminal accesses the network by using the target AP. In actual application, to provide relatively good experience for a user and reduce network access time, before performing network access detection, the terminal automatically filters out an AP that is determined incapable of accessing a network, that is, automatic network access detection is not performed subsequently on an AP that is determined incapable of accessing a network, unless the user manually taps to access the AP. Generally, a method used by a terminal to filter out an AP that is determined incapable of accessing a network is: obtaining a detection result for the AP in previous network access detection, and if the AP cannot access a network previously, determining that the AP cannot access a network and automatically filtering out the AP so that the AP is not automatically accessed subsequently any more. If the AP can access a network previously, the AP is automatically accessed and network access detection is performed.

However, usually because of network congestion or terminal hardware stability, a small probability of erroneous determining also exists in network access detection, that is, an AP that can access a network is detected as an AP that cannot access a network. If it is detected, in network access detection, that an AP cannot access a network, this does not absolutely indicate that the AP is unavailable. Because erroneous determining may exist, considering only a previous network access detection result may cause extremely low accuracy of network access detection.

To resolve the foregoing problem, this embodiment of the present invention provides an access processing method, so that a target AP that may be erroneously determined has an opportunity for being reselected for access, and network access detection is re-initiated.

In this embodiment of the present invention, a terminal enables Wi-Fi. When it is detected that a target AP cannot access a network in previous network access detection that is closest to a current moment, network access information of the target AP before the previous network access detection is obtained. The network access information can indicate multiple network access detection records of the target AP before the previous network access detection, such as whether a network is successfully accessed by using the target AP, or access duration of accessing the network by using the target AP. It should be noted that the network access information may be stored in a newly-added field of a network attribute database of the terminal.

S101. Analyze the network access information to determine whether the target network access point has a network access capability.

In this embodiment of the present invention, the obtained network access information is analyzed to further determine whether the target AP has the network access capability. If the target AP has the network access capability, the previous network access detection may be erroneous determining. Specifically, an analysis method for analyzing the network access information may be determined according to an existing form of the network access information. For example, if the network access information includes multiple network access detection record entries that are used to indicate whether the target AP successfully accesses the network in a detection process before the previous network access detection, an analysis process of analyzing the network access information may be determining whether the network access detection record entries are all successful record entries of successfully accessing the network. If the network access detection record entries are all successful record entries, it is most likely that the previous network access detection is erroneous determining, and the target AP has the network access capability. Further, if the network access detection record entries include an unsuccessful record entry of unsuccessfully accessing the network, a preset quantity of network access detection record entries that are adjacent to the previous network access detection may be obtained. If the preset quantity of network access detection record entries are all successful record entries, it indicates that the previous network access detection may be erroneous determining, and it is determined that the target AP has the network access capability. Still further, if the preset quantity of network access detection record entries include an unsuccessful record entry, a percentage of a successful record entry in all the network access detection record entries may be counted. If the percentage is greater than a preset threshold (such as 50%), it is also determined that the target AP has the network access capability, and the previous network access detection may be erroneous determining.

It should be noted that an analysis manner of analyzing the network access information to determine whether the target AP has the network access capability is not limited to the foregoing example. For example, if the network access information is network access duration of the target AP before the previous network access detection, the analysis manner may further be analyzing the network access duration in the network access information, so as to determine whether the target AP has the network access capability.

S102. If the target network access point has the network access capability, automatically access the target network access point, and detect whether the target network access point can currently access the network.

In this embodiment of the present invention, if an analysis result of analyzing the network access information indicates that the target AP has the network access capability, the target AP is automatically accessed, and it is detected whether the target AP can currently access the network. If the target AP can currently access the network, the network is accessed by using the target AP, or if the target AP cannot access the network, another AP is searched for, network access detection is performed on the another AP, and a result of the network access detection is stored so as to be used next time a terminal enables Wi-Fi to filter out an AP.

By using this embodiment of the present invention, although the target AP is erroneously determined in network access detection, and it is detected that the target AP cannot access a network, the target AP may not be filtered out directly in a subsequent phase of automatically accessing an AP. The network access information of the target AP before the previous network access detection is analyzed to determine whether the target AP has the network access capability. When it is detected that the target AP has the network access capability, the target AP may also be automatically accessed, and network access detection is performed on the target AP, that is, an error tolerance and recovery method is provided for the target AP.

In this embodiment of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

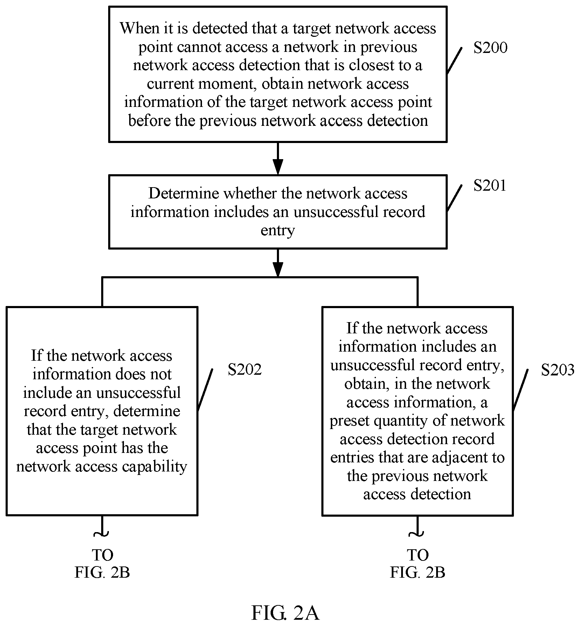

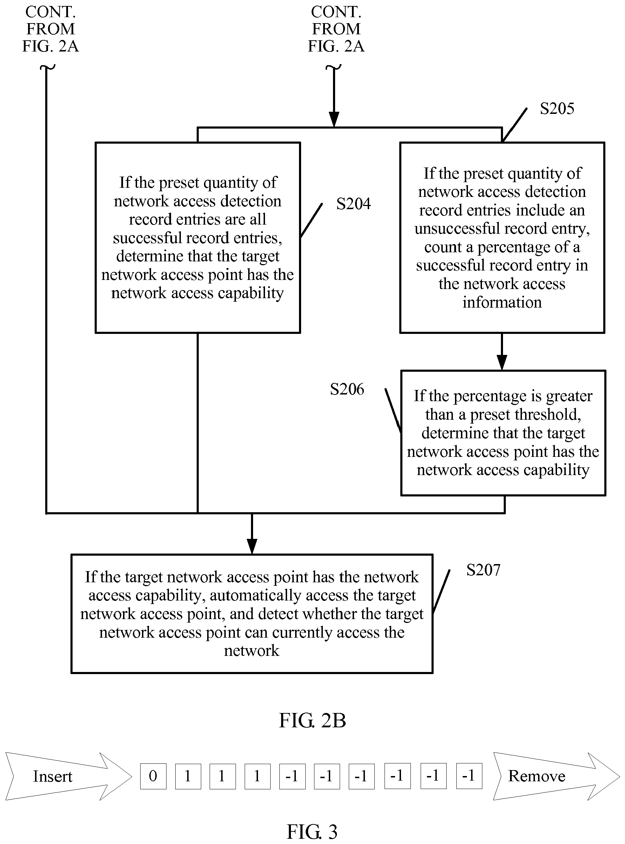

Referring to FIG. 2A and FIG. 2B, FIG. 2A and FIG. 2B are a schematic flowchart of another access processing method according to an embodiment of the present invention. As shown in FIG. 2A and FIG. 2B, the access processing method provided in this embodiment includes steps S200 to S207.

S200. When it is detected that a target network access point cannot access a network in previous network access detection that is closest to a current moment, obtain network access information of the target network access point before the previous network access detection.

In this embodiment of the present invention, the network access information of the target network access point before the previous network access detection may include at least one network access detection record entry before the previous network access detection. The network access detection record entry is used to indicate whether the target AP successfully accesses the network in a network access detection record before the previous network access detection, and the network access detection record entry is a successful record entry or an unsuccessful record entry. In this embodiment of the present invention, all historical detection record entries may be stored by using a newly-added field in a network attribute database, and all the historical detection record entries include a detection result of the previous network access detection and the network access detection record entry before the previous network access detection. As shown in FIG. 3, a newly-added field INTERNET HISTORY is provided in this embodiment of the present invention to store all the historical detection record entries. The newly-added field records a maximum of 10 historical detection record entries in total, which are specifically INTERNET_HISTORY: 0/1/1/1/-1/-1/-1/-1/-1/-1, where on the left is a recent detection result (that is, the detection result of the previous network access detection), and on the right is a farthest detection result. 0 represents that the target AP cannot access the network in network access detection, 1 represents that the target AP can access the network in network access detection, and -1 represents that detection is not performed (there are all -1 in an initial list). In a specific algorithm, an array may be used to store all the historical detection record entries. For example, h[0] is used to represent a previous detection result, and h[1...9] is the network access detection record entry before the previous network access detection. Generally, when h[0] is 0, that is, when it is detected that the target AP cannot access the network previously, a subsequent step of obtaining the network access information of the target AP before the previous network access detection is performed.

S201. Determine whether the network access information includes an unsuccessful record entry.

In this embodiment of the present invention, to determine whether the target AP has the network access capability, it is determined whether the network access information before the previous network access detection includes an unsuccessful record entry. Here, an example in which h[1...9] is the network access detection record entry in the network access information is still used for description. That is, the network access detection record entry h[1...9] is traversed from left to right, to obtain a quantity w (w is greater than or equal to 1) of network access detection record entries whose values are not -1 in the array h[1...9], and determine whether there are all 1 in arrays h[1] to h[w].

S202. If the network access information does not include an unsuccessful record entry, determine that the target network access point has the network access capability.

In this embodiment of the present invention, if none of the network access detection record entries in the network access information includes an unsuccessful record entry, it is determined that the target AP has the network access capability, that is, if it is determined that there are all 1 in the arrays h[1] to h[w], it is determined that the target AP has the network access capability.

S203. If the network access information includes an unsuccessful record entry, obtain, in the network access information, a preset quantity of network access detection record entries that are adjacent to the previous network access detection.

In this embodiment of the present invention, if the network access detection record entries in the network access information include an unsuccessful record entry, that is, the arrays h[1] to h[w] include 0, the preset quantity of network access detection record entries that are adjacent to the previous network access detection are obtained. In the network access information, the network access detection record entries are arranged according to a detection time sequence, and the preset quantity of network access detection record entries that are adjacent to the previous network access detection are a preset quantity of network access detection record entries for recent detection except the previous network access detection. The preset quantity may be determined according to an actual condition, for example, the preset quantity may be two, and values of h[1] and h[2] in the array are obtained.

S204. If the preset quantity of network access detection record entries are all successful record entries, determine that the target network access point has the network access capability.

In this embodiment of the present invention, if the obtained the preset quantity of network access detection record entries are all successful record entries, it is determined that the target AP has the network access capability. If the preset quantity is n (n is less than or equal to w), that is, when h[1] to h[n] are all 1, it is determined that the target AP has the network access capability.

S205. If the preset quantity of network access detection record entries include an unsuccessful record entry, count a percentage of a successful record entry in the network access information.

In this embodiment of the present invention, when the preset quantity of network access detection record entries that are adjacent to the previous network access detection include an unsuccessful record entry, that is, 0 exists in the arrays h[1] to h[n], a percentage of a successful record entry in the network access information is counted. A specific counting method may be calculating a quantity w of network access detection record entries in the network access information, that is, calculating a quantity of values that are not -1 in the array h[1...9], and calculating a quantity m of successful record entries in the network access information, that is, calculating a quantity of values 1 in the array h[1...9], and the percentage P of a successful record entry is m/w.

S206. If the percentage is greater than a preset threshold, determine that the target network access point has the network access capability.

In this embodiment of the present invention, if the calculated percentage P is greater than the preset threshold, it is determined that the target AP has the network access capability. The preset threshold may be set according to an actual condition, for example, may be 60%, or may be 50%. S207. If the target network access point has the network access capability, automatically access the target network access point, and detect whether the target network access point can currently access the network.

For step S207 in this embodiment of the present invention, refer to step S102 in the embodiment in FIG. 1, and details are not described herein again.

In this embodiment of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can currently access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

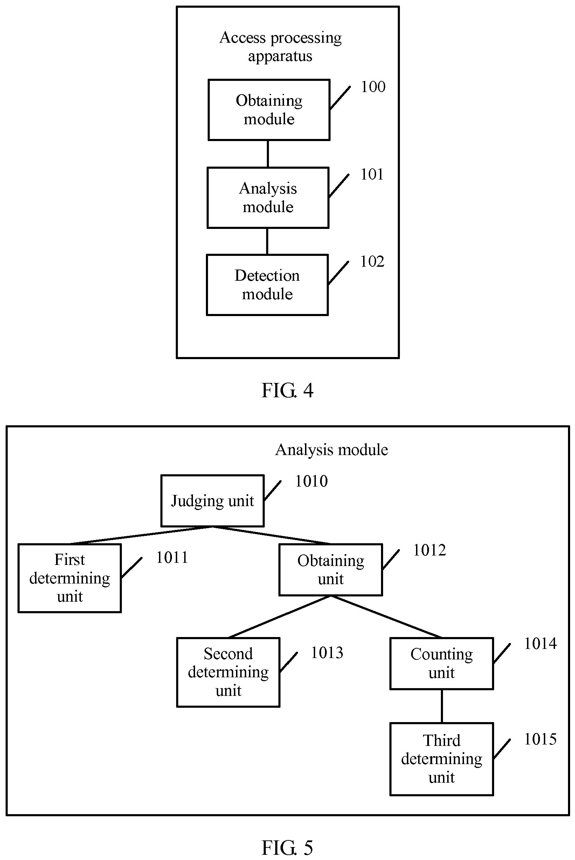

Referring to FIG. 4, FIG. 4 is a schematic structural diagram of an access processing apparatus according to an embodiment of the present invention. As shown in FIG. 4, the access processing apparatus in this embodiment may include an obtaining module 100, an analysis module 101, and a detection module 102.

The obtaining module 100 is configured to: when it is detected that a target network access point cannot access a network in previous network access detection that is closest to a current moment, obtain network access information of the target network access point before the previous network access detection.

In this embodiment of the present invention, a target AP may be any AP for which a terminal pre-stores an AP identifier. Before accessing a network by using the target AP, the terminal needs to perform network access detection on the target AP, that is, detect whether the target AP can access a network. When it is detected that the target AP cannot access a network, the terminal searches for another AP in a preset distance range, or if the target AP can access a network, the terminal accesses the network by using the target AP. In actual application, to provide relatively good experience for a user and reduce network access time, before performing network access detection, the terminal automatically filters out an AP that is determined incapable of accessing a network, that is, automatic network access detection is not performed subsequently on an AP that is determined incapable of accessing a network, unless the user manually taps to access the AP. Generally, a method used by a terminal to filter out an AP that is determined incapable of accessing a network is: obtaining a detection result for the AP in previous network access detection, and if the AP cannot access a network previously, determining that the AP cannot access a network and automatically filtering out the AP so that the AP is not automatically accessed subsequently any more. If the AP can access a network previously, the AP is automatically accessed and network access detection is performed.

However, usually because of network congestion or terminal hardware stability, a small probability of erroneous determining also exists in network access detection, that is, an AP that can access a network is detected as an AP that cannot access a network. If it is detected, in network access detection, that an AP cannot access a network, this does not absolutely indicate that the AP is unavailable. Because erroneous determining may exist, considering only a previous network access detection result may cause extremely low accuracy of network access detection.

To resolve the foregoing problem, this embodiment of the present invention provides an access processing method, so that a target AP that may be erroneously determined has an opportunity for being reselected for access, and network access detection is re-initiated.

In this embodiment of the present invention, a terminal enables Wi-Fi. When it is detected that a target AP cannot access a network in previous network access detection that is closest to a current moment, the obtaining module 100 obtains network access information of the target AP before the previous network access detection. The network access information can indicate multiple network access detection records of the target AP before the previous network access detection, such as whether a network is successfully accessed by using the target AP, or access duration of accessing the network by using the target AP. It should be noted that the network access information may be stored in a newly-added field of a network attribute database of the terminal.

The analysis module 101 is configured to analyze the network access information to determine whether the target network access point has a network access capability.

In this embodiment of the present invention, the analysis module 101 analyzes the obtained network access information to further determine whether the target AP has the network access capability. If the target AP has the network access capability, the previous network access detection may be erroneous determining. Specifically, an analysis method for analyzing the network access information may be determined according to an existing form of the network access information. For example, if the network access information includes multiple network access detection record entries that are used to indicate whether the target AP successfully accesses the network in a detection process before the previous network access detection, an analysis process of analyzing the network access information may be determining whether the network access detection record entries are all successful record entries of successfully accessing the network. If the network access detection record entries are all successful record entries, it is most likely that the previous network access detection is erroneous determining, and the target AP has the network access capability. Further, if the network access detection record entries include an unsuccessful record entry of unsuccessfully accessing the network, a preset quantity of network access detection record entries that are adjacent to the previous network access detection may be obtained. If the preset quantity of network access detection record entries are all successful record entries, it indicates that the previous network access detection may be erroneous determining, and it is determined that the target AP has the network access capability. Still further, if the preset quantity of network access detection record entries include an unsuccessful record entry, a percentage of a successful record entry in all the network access detection record entries may be counted. If the percentage is greater than a preset threshold (such as 50%), it is also determined that the target AP has the network access capability, and the previous network access detection may be erroneous determining.

It should be noted that an analysis manner of analyzing the network access information to determine whether the target AP has the network access capability is not limited to the foregoing example. For example, if the network access information is network access duration of the target AP before the previous network access detection, the analysis manner may further be analyzing the network access duration in the network access information, so as to determine whether the target AP has the network access capability.

The detection module 102 is configured to: if the target network access point has the network access capability, automatically access the target network access point, and detect whether the target network access point can currently access the network.

In this embodiment of the present invention, if an analysis result of analyzing the network access information indicates that the target AP has the network access capability, the detection module 102 automatically accesses the target AP, and detects whether the target AP can currently access the network. If the target AP can currently access the network, the network is accessed by using the target AP, or if the target AP cannot access the network, another AP is searched for, network access detection is performed on the another AP, and a result of the network access detection is stored so as to be used next time a terminal enables Wi-Fi to filter out an AP.

By using this embodiment of the present invention, although the target AP is erroneously determined in network access detection, and it is detected that the target AP cannot access a network, the target AP may not be filtered out directly in a subsequent phase of automatically accessing an AP. The network access information of the target AP before the previous network access detection is analyzed to determine whether the target AP has the network access capability. When it is detected that the target AP has the network access capability, the target AP may also be automatically accessed, and network access detection is performed on the target AP, that is, an error tolerance and recovery method is provided for the target AP.

In this embodiment of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can currently access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

Referring to FIG. 5, FIG. 5 is a schematic structural diagram of an analysis module according to an embodiment of the present invention. As shown in FIG. 5, the analysis module in this embodiment may include a judging unit 1010 and a first determining unit 1011.

The judging unit 1010 is configured to determine whether the network access information includes an unsuccessful record entry.

In this embodiment of the present invention, the network access information of the target network access point before the previous network access detection may include at least one network access detection record entry before the previous network access detection. The network access detection record entry is used to indicate whether the target AP successfully accesses the network in a network access detection record before the previous network access detection, and the network access detection record entry is a successful record entry or an unsuccessful record entry. In this embodiment of the present invention, all historical detection record entries may be stored by using a newly-added field in a network attribute database, and all the historical detection record entries include a detection result of the previous network access detection and the network access detection record entry before the previous network access detection. As shown in FIG. 3, a newly-added field INTERNET HISTORY is provided in this embodiment of the present invention to store all the historical detection record entries. The newly-added field records a maximum of 10 historical detection record entries in total, which are specifically INTERNET_HISTORY: 0/1/1/1/-1/-1/-1/-1/-1/-1, where on the left is a recent detection result (that is, the detection result of the previous network access detection), and on the right is a farthest detection result. 0 represents that the target AP cannot access the network in network access detection, 1 represents that the target AP can access the network in network access detection, and -1 represents that detection is not performed (there are all -1 in an initial list). In a specific algorithm, an array may be used to store all the historical detection record entries. For example, h[0] is used to represent a previous detection result, and h[1...9] is the network access detection record entry before the previous network access detection. Generally, when h[0] is 0, that is, when it is detected that the target AP cannot access the network previously, a subsequent step of obtaining the network access information of the target AP before the previous network access detection is performed.

In this embodiment of the present invention, to determine whether the target AP has the network access capability, the judging unit 1010 determines whether the network access information before the previous network access detection includes an unsuccessful record entry. Here, an example in which h[1...9] is the network access detection record entry in the network access information is still used for description. That is, the network access detection record entry h[1...9] is traversed from left to right, to obtain a quantity w (w is greater than or equal to 1) of network access detection record entries whose values are not -1 in the array h[1...9], and determine whether there are all 1 in arrays h[1] to h[w].

The first determining unit 1011 is configured to: if the network access information does not include an unsuccessful record entry, determine that the target network access point has the network access capability.

In this embodiment of the present invention, if none of the network access detection record entries in the network access information includes an unsuccessful record entry, the first determining unit 1011 determines that the target AP has the network access capability, that is, if it is determined that there are all 1 in the arrays h[1] to h[w], it is determined that the target AP has the network access capability.

Optionally, the analysis module in this embodiment of the present invention may further include an obtaining unit 1012 and a second determining unit 1013.

The obtaining unit 1012 is configured to: if the network access information includes an unsuccessful record entry, obtain, in the network access information, a preset quantity of network access detection record entries that are adjacent to the previous network access detection.

In this embodiment of the present invention, if the network access detection record entries in the network access information include an unsuccessful record entry, that is, the arrays h[1] to h[w] include 0, the obtaining unit 1012 obtains the preset quantity of network access detection record entries that are adjacent to the previous network access detection. In the network access information, the network access detection record entries are arranged according to a detection time sequence, and the preset quantity of network access detection record entries that are adjacent to the previous network access detection are a preset quantity of network access detection record entries for recent detection except the previous network access detection. The preset quantity may be determined according to an actual condition, for example, the preset quantity may be two, and values of h[1] and h[2] in the array are obtained.

The second determining unit 1013 is configured to: if the preset quantity of network access detection record entries are all successful record entries, determine that the target network access point has the network access capability.

In this embodiment of the present invention, if the obtained the preset quantity of network access detection record entries are all successful record entries, the second determining unit 1013 determines that the target AP has the network access capability. If the preset quantity is n (n is less than or equal to w), that is, when h[1] to h[n] are all 1, it is determined that the target AP has the network access capability.

Optionally, the analysis module in this embodiment of the present invention may further include a counting unit 1014 and a third determining unit 1015.

The counting unit 1014 is configured to: if the historical detection record entries of the preset quantity include an unsuccessful record entry, count a percentage of a successful record entry in the network access information.

In this embodiment of the present invention, when the preset quantity of network access detection record entries that are adjacent to the previous network access detection include an unsuccessful record entry, that is, 0 exists in the arrays h[1] to h[n], the counting unit 1014 counts a percentage of a successful record entry in the network access information. A specific counting method may be calculating a quantity w of network access detection record entries in the network access information, that is, calculating a quantity of values that are not -1 in the array h[1...9], and calculating a quantity m of successful record entries in the network access information, that is, calculating a quantity of values 1 in the array h[1...9], and the percentage P of a successful record entry is m/w.

The third determining unit 1015 is configured to: if the percentage is greater than a preset threshold, determine that the target network access point has the network access capability.

In this embodiment of the present invention, if the calculated percentage P is greater than the preset threshold, the third determining unit 1015 determines that the target AP has the network access capability. The preset threshold may be set according to an actual condition, for example, may be 60%, or may be 50%.

In this embodiment of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can currently access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

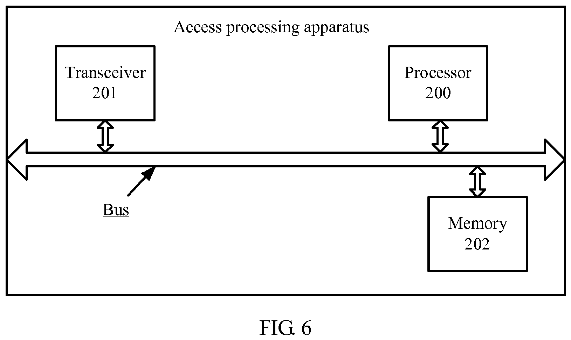

Referring to FIG. 6, FIG. 6 is a schematic structural diagram of another access processing apparatus according to an embodiment of the present invention. As shown in FIG. 6, the access processing apparatus in this embodiment includes a processor 200, a transceiver 201, and a memory 202. The memory 202 is configured to store program code, and the processor 200 is configured to invoke the program code in the memory 202 to perform a corresponding operation. The processor 200, the transceiver 201, and the memory 202 are all connected to a bus, and communicate by using the bus.

The processor is configured to: when it is detected that a target network access point cannot access a network in previous network access detection that is closest to a current moment, obtain network access information of the target network access point before the previous network access detection.

The processor is further configured to analyze the network access information to determine whether the target network access point has a network access capability.

The processor is further configured to: if the target network access point has the network access capability, automatically access the target network access point, and detect whether the target network access point can currently access the network.

Optionally, a target AP may be any AP for which a terminal pre-stores an AP identifier. Before accessing a network by using the target AP, the terminal needs to perform network access detection on the target AP, that is, detect whether the target AP can currently access a network. When it is detected that the target AP cannot currently access a network, the terminal searches for another AP in a preset distance range, or if the target AP can currently access a network, the terminal accesses the network by using the target AP. In actual application, to provide relatively good experience for a user and reduce network access time, before performing network access detection, the terminal automatically filters out an AP that is determined incapable of accessing a network, that is, automatic network access detection is not performed subsequently on an AP that is determined incapable of accessing a network, unless the user manually taps to access the AP. Generally, a method used by a terminal to filter out an AP that is determined incapable of accessing a network is: obtaining a detection result for the AP in previous network access detection, and if the AP cannot access a network previously, determining that the AP cannot access a network and automatically filtering out the AP so that the AP is not automatically accessed subsequently any more. If the AP can access a network previously, the AP is automatically accessed and network access detection is performed.

However, usually because of network congestion or terminal hardware stability, a small probability of erroneous determining also exists in network access detection, that is, an AP that can access a network is detected as an AP that cannot access a network. If it is detected, in network access detection, that an AP cannot access a network, this does not absolutely indicate that the AP is unavailable. Because erroneous determining may exist, considering only a previous network access detection result may cause extremely low accuracy of network access detection.

To resolve the foregoing problem, this embodiment of the present invention provides an access processing method, so that a target AP that may be erroneously determined has an opportunity for being reselected for access, and network access detection is re-initiated.

In this embodiment of the present invention, a terminal enables Wi-Fi. When it is detected that a target AP cannot access a network in previous network access detection that is closest to a current moment, network access information of the target AP before the previous network access detection is obtained. The network access information can indicate multiple network access detection records of the target AP before the previous network access detection, such as whether a network is successfully accessed by using the target AP, or access duration of accessing the network by using the target AP. It should be noted that the network access information may be stored in a newly-added field of a network attribute database of the terminal.

Optionally, the obtained network access information is analyzed to further determine whether the target AP has the network access capability. If the target AP has the network access capability, the previous network access detection may be erroneous determining. Specifically, an analysis method for analyzing the network access information may be determined according to an existing form of the network access information. For example, if the network access information includes multiple network access detection record entries that are used to indicate whether the target AP successfully accesses the network in a detection process before the previous network access detection, an analysis process of analyzing the network access information may be determining whether the network access detection record entries are all successful record entries of successfully accessing the network. If the network access detection record entries are all successful record entries, it is most likely that the previous network access detection is erroneous determining, and the target AP has the network access capability. Further, if the network access detection record entries include an unsuccessful record entry of unsuccessfully accessing the network, a preset quantity of network access detection record entries that are adjacent to the previous network access detection may be obtained. If the preset quantity of network access detection record entries are all successful record entries, it indicates that the previous network access detection may be erroneous determining, and it is determined that the target AP has the network access capability. Still further, if the preset quantity of network access detection record entries include an unsuccessful record entry, a percentage of a successful record entry in all the network access detection record entries may be counted. If the percentage is greater than a preset threshold (such as 50%), it is also determined that the target AP has the network access capability, and the previous network access detection may be erroneous determining.

It should be noted that an analysis manner of analyzing the network access information to determine whether the target AP has the network access capability is not limited to the foregoing example. For example, if the network access information is network access duration of the target AP before the previous network access detection, the analysis manner may further be analyzing the network access duration in the network access information, so as to determine whether the target AP has the network access capability.

Optionally, if an analysis result of analyzing the network access information indicates that the target AP has the network access capability, the target AP is automatically accessed, and it is detected whether the target AP can access the network. If the target AP can access the network, the network is accessed by using the target AP, or if the target AP cannot access the network, another AP is searched for, network access detection is performed on the another AP, and a result of the network access detection is stored so as to be used next time a terminal enables Wi-Fi to filter out an AP.

By using this embodiment of the present invention, although the target AP is erroneously determined in network access detection, and it is detected that the target AP cannot access a network, the target AP may not be filtered out directly in a subsequent phase of automatically accessing an AP. The network access information of the target AP before the previous network access detection is analyzed to determine whether the target AP has the network access capability. When it is detected that the target AP has the network access capability, the target AP may also be automatically accessed, and network access detection is performed on the target AP, that is, an error tolerance and recovery method is provided for the target AP.

The network access information includes at least one network access detection record entry before the previous network access detection, and the network access detection record entry is a successful record entry or an unsuccessful record entry.

The processor is further configured to determine whether the network access information includes an unsuccessful record entry.

The processor is further configured to: if the network access information does not include an unsuccessful record entry, determine that the target network access point has the network access capability.

Optionally, the network access information of the target network access point before the previous network access detection may include at least one network access detection record entry before the previous network access detection. The network access detection record entry is used to indicate whether the target AP successfully accesses the network in a network access detection record before the previous network access detection, and the network access detection record entry is a successful record entry or an unsuccessful record entry. In this embodiment of the present invention, all historical detection record entries may be stored by using a newly-added field in a network attribute database, and all the historical detection record entries include a detection result of the previous network access detection and the network access detection record entry before the previous network access detection. As shown in FIG. 3, a newly-added field INTERNET HISTORY is provided in this embodiment of the present invention to store all the historical detection record entries. The newly-added field records a maximum of 10 historical detection record entries in total, which are specifically INTERNET_HISTORY: 0/1/1/1/-1/-1/-1/-1/-1/-1, where on the left is a recent detection result (that is, the detection result of the previous network access detection), and on the right is a farthest detection result. 0 represents that the target AP cannot access the network in network access detection, 1 represents that the target AP can access the network in network access detection, and -1 represents that detection is not performed (there are all -1 in an initial list). In a specific algorithm, an array may be used to store all the historical detection record entries. For example, h[0] is used to represent a previous detection result, and h[1...9] is the network access detection record entry before the previous network access detection. Generally, when h[0] is 0, that is, when it is detected that the target AP cannot access the network previously, a subsequent step of obtaining the network access information of the target AP before the previous network access detection is performed.

Optionally, to determine whether the target AP has the network access capability, it is determined whether the network access information before the previous network access detection includes an unsuccessful record entry. Here, an example in which h[1...9] is the network access detection record entry in the network access information is still used for description. That is, the network access detection record entry h[1...9] is traversed from left to right, to obtain a quantity w (w is greater than or equal to 1) of network access detection record entries whose values are not -1 in the array h[1...9], and determine whether there are all 1 in arrays h[1] to h[w].

Optionally, if the historical detection record entries in the network access information do not include an unsuccessful record entry, it is determined that the target AP has the network access capability, that is, if it is determined that there are all 1 in the arrays h[1] to h[w], it is determined that the target AP has the network access capability.

The processor is further configured to: if the network access information includes an unsuccessful record entry, obtain, in the network access information, a preset quantity of network access detection record entries that are adjacent to the previous network access detection; and the processor is further configured to: if the preset quantity of network access detection record entries are all successful record entries, determine that the target network access point has the network access capability.

Optionally, if the network access detection record entries in the network access information include an unsuccessful record entry, that is, the arrays h[1] to h[w] include 0, the preset quantity of network access detection record entries that are adjacent to the previous network access detection are obtained. In the network access information, the network access detection record entries are arranged according to a detection time sequence, and the preset quantity of network access detection record entries that are adjacent to the previous network access detection are a preset quantity of network access detection record entries for recent detection except the previous network access detection. The preset quantity may be determined according to an actual condition, for example, the preset quantity may be two, and values of h[1] and h[2] in the array are obtained.

Optionally, if the obtained the preset quantity of network access detection record entries are all successful record entries, it is determined that the target AP has the network access capability. If the preset quantity is n (n is less than or equal to w), that is, when h[1] to h[n] are all 1, it is determined that the target AP has the network access capability.

The processor is further configured to: if the preset quantity of network access detection record entries include an unsuccessful record entry, count a percentage of a successful record entry in the network access information.

The processor is further configured to: if the percentage is greater than a preset threshold, determine that the target network access point has the network access capability.

Optionally, when the preset quantity of network access detection record entries that are adjacent to the previous network access detection include an unsuccessful record entry, that is, 0 exists in the arrays h[1] to h[n], a percentage of a successful record entry in the network access information is counted. A specific counting method may be calculating a quantity w of network access detection record entries in the network access information, that is, calculating a quantity of values that are not -1 in the array h[1...9], and calculating a quantity m of successful record entries in the network access information, that is, calculating a quantity of values 1 in the array h[1...9], and the percentage P of a successful record entry is m/w.

Optionally, if the calculated percentage P is greater than the preset threshold, it is determined that the target AP has the network access capability. The preset threshold may be set according to an actual condition, for example, may be 60%, or may be 50%.

In this embodiment of the present invention, when it is detected that a target network access point cannot access a network in previous network access detection that is closest to a current moment, network access information of the target network access point before the previous network access detection is obtained; the network access information is analyzed to determine whether the target network access point has a network access capability; and if the target network access point has the network access capability, the target network access point is automatically accessed, and it is detected whether the target network access point can currently access the network. In this implementation manner, when it is detected that the target network access point cannot access the network in the previous network access detection, the target network access point is not filtered out directly. The network access information before the previous network access detection is further analyzed to determine whether to perform network access detection on the target network access point. Therefore, in this manner, filtering out, because of erroneous determining, a target network access point that can access a network is avoided, and accuracy of network access detection is improved.

Persons of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What are disclosed above are merely example embodiments of the present invention, and certainly are not intended to limit the protection scope of the present invention. Therefore, variations made in accordance with the claims of the present invention shall fall within the scope of the present invention.

## Claims

1. A network access processing method by a network access processing apparatus, comprising: performing a network access detection on a target AP comprising determining whether the target AP is capable of accessing the network;
when it is detected that the target network access point cannot access a network in the previous network access detection that is closest to a current moment, obtaining network access
detection result information of the target network access point before the previous network access detection; analyzing the network access detection result information to determine whether the target network access point has a network access capability by determining that a percentage of successful record entries in the network access detection result information is above a preset threshold; and if the target network access point has the network access capability, automatically accessing the target network access point, and detecting whether the target network access point can currently access the network.

2. The method according to claim 1, wherein the network access information comprises at least one network access detection record entry before the previous network access detection, and the network access detection record entry is a successful record entry or an unsuccessful record entry.

3. The method according to claim 2, wherein the analyzing the network access information to determine whether the target network access point has a network access capability comprises:
determining whether the network access information comprises an unsuccessful record entry; and
if the network access information does not comprise an unsuccessful record entry, determining that the target network access point has the network access capability.

4. The method according to claim 3, after the determining whether the network access information comprises an unsuccessful record entry, further comprising:
if the network access information comprises an unsuccessful record entry, obtaining, in the network access information, a preset quantity of network access detection record entries that are adjacent to the previous network access detection; and
if the preset quantity of network access detection record entries are all successful record entries, determining that the target network access point has the network access capability.

5. The method according to claim 4, after the obtaining, in the network access information, a preset quantity of network access detection record entries that are adjacent to the previous network access detection, further comprising:
if the preset quantity of network access detection record entries comprise an unsuccessful record entry, counting a percentage of a successful record entry in the network access information; and
if the percentage is greater than a preset threshold, determining that the target network access point has the network access capability.

6. A network access processing apparatus, comprising:
an obtaining module (100), configured to: perform a network access detection on a target AP comprising determining whether the target AP is capable of accessing the network; and, when it is detected that the target network access point cannot access a network in the previous network access detection that is closest to a current moment, obtain network access detection result information of the target network access point before the previous network access detection;
an analysis module (101), configured to analyze the network access detection result information to determine whether the target network access point has a network access capability by determining that a percentage of successful record entries in the network access detection result information is above a preset threshold; and
a detection module (102), configured to: if the target network access point has the network access capability, automatically access the target network access point, and detect whether the target network access point can access the network.

7. The apparatus according to claim 6, wherein the network access information comprises at least one network access detection record entry before the previous network access detection, and the network access detection record entry is a successful record entry or an unsuccessful record entry.

8. The apparatus according to claim 7, wherein the analysis module (101) comprises:
a judging unit (1010), configured to determine whether the network access information comprises an unsuccessful record entry; and
a first determining unit (1011), configured to: if the network access information does not comprise an unsuccessful record entry, determine that the target network access point has the network access capability.

9. The apparatus according to claim 8, wherein the analysis module (101) further comprises:
an obtaining unit (1012), configured to: if the network access information comprises an unsuccessful record entry, obtain, in the network access information, a preset quantity of network access detection record entries that are adjacent to the previous network access detection; and
a second determining unit (1013), configured to: if the preset quantity of network access detection record entries are all successful record entries, determine that the target network access point has the network access capability.

10. The apparatus according to claim 9, wherein the analysis module (101) further comprises:
a counting unit (1014), configured to: if the preset quantity of network access detection record entries comprise an unsuccessful record entry, count a percentage of a successful record entry in the network access information; and
a third determining unit (1015), configured to: if the percentage is greater than a preset threshold, determine that the target network access point has the network access capability.

11. An apparatus, comprising a processor (200), a memory (202), and a network interface, wherein the memory (202) stores a group of program code, and the processor (200) is configured to invoke the program code stored in the memory (202), to perform the method according to any one of claims of 1 to 5.

12. A computer-readable storage medium comprising instructions which, when executed by a computer, cause the computer to carry out the method according to any one of claims 1 to 5.

13. A computer program product comprising a non-transitory computer-readable medium storing computer executable instructions that when executed by a processor instruct the processor to execute the instructions to carry out the method according to any one of claims 1 to 5.

## Patentansprüche

1. Netzzugriffsverarbeitungsverfahren durch eine Netzzugriffsverarbeitungsvorrichtung, umfassend:
Durchführen einer Netzzugriffserkennung an einem Ziel-AP, was ein Ermitteln umfasst, ob der Ziel-AP fähig ist, auf das Netz zuzugreifen;
wenn in der vorangehenden Netzzugriffserkennung, die einem aktuellen Zeitpunkt am nächsten ist, erkannt wird, dass der Ziel-Netzzugriffspunkt nicht auf ein Netz zugreifen kann, Erhalten von Netzzugriffserkennungs-Ergebnisinformationen des Ziel-Netzzugriffspunkts vor der vorangehenden Netzzugriffserkennung;
Analysieren der Netzzugriffserkennungs-Ergebnisinformationen, um zu ermitteln, ob der Ziel-Netzzugriffspunkt eine Netzzugriffsfähigkeit aufweist, durch Ermitteln, dass ein Prozentsatz von erfolgreichen Datensatzeinträgen in den Netzzugriffserkennungs-Ergebnisinformationen über einem voreingestellten Schwellenwert liegt; und
falls der Ziel-Netzzugriffspunkt die Netzzugriffsfähigkeit aufweist, automatisches Zugreifen auf den Ziel-Netzzugriffspunkt und Erkennen, ob der Ziel-Netzzugriffspunkt aktuell Zugriff zum Netz hat.

2. Verfahren nach Anspruch 1, wobei die Netzzugriffsinformationen mindestens einen Netzzugriffserkennungs-Datensatzeintrag vor der vorangehenden Netzzugriffserkennung umfassen und der Netzzugriffserkennungs-Datensatzeintrag ein erfolgreicher Datensatzeintrag oder ein erfolgloser Datensatzeintrag ist.

3. Verfahren nach Anspruch 2, wobei das Analysieren der Netzzugriffsinformationen, um zu ermitteln, ob der Ziel-Netzzugriffspunkt eine Netzzugriffsfähigkeit aufweist, umfasst:
Ermitteln, ob die Netzzugriffsinformationen einen erfolglosen Datensatzeintrag umfassen; und
falls die Netzzugriffsinformationen keinen erfolglosen Datensatzeintrag umfassen, Ermitteln, dass der Ziel-Netzzugriffspunkt die Netzzugriffsfähigkeit aufweist.

4. Verfahren nach Anspruch 3, das nach dem Ermitteln, ob die Netzzugriffsinformationen einen erfolglosen Datensatzeintrag umfassen, ferner umfasst:
falls die Netzzugriffsinformationen einen erfolglosen Datensatzeintrag umfassen, Erhalten, in den Netzzugriffsinformationen, einer voreingestellten Menge von Netzzugriffserkennungs-Datensatzeinträgen, die der vorangehenden Netzzugriffserkennung benachbart sind; und
falls die voreingestellte Menge von Netzzugriffserkennungs-Datensatzeinträgen alle erfolgreiche Datensatzeinträge sind, Ermitteln, dass der Ziel-Netzzugriffspunkt die Netzzugriffsfähigkeit aufweist.

5. Verfahren nach Anspruch 4, das nach dem Erhalten, in den Netzzugriffsinformationen, einer voreingestellten Menge von Netzzugriffserkennungs-Datensatzeinträgen, die der vorangehenden Netzzugriffserkennung benachbart sind, ferner umfasst:
falls die voreingestellte Menge von Netzzugriffserkennungs-Datensatzeinträgen einen erfolglosen Datensatzeintrag umfasst, Zählen eines Prozentsatzes eines erfolgreichen Datensatzeintrags in den Netzzugriffsinformationen; und
falls der Prozentsatz größer als ein voreingestellter Schwellenwert ist, Ermitteln, dass der Ziel-Netzzugriffspunkt die Netzzugriffsfähigkeit aufweist.

6. Netzzugriffsverarbeitungsvorrichtung, umfassend:
ein Bezugsmodul (100), das ausgelegt ist:
eine Netzzugriffserkennung an einem Ziel-AP durchzuführen, was ein Ermitteln umfasst, ob der Ziel-AP fähig ist, auf das Netz zuzugreifen; und
wenn in der vorangehenden Netzzugriffserkennung, die einem aktuellen Zeitpunkt am nächsten ist, erkannt wird, dass der Ziel-Netzzugriffspunkt nicht auf ein Netz zugreifen kann, Netzzugriffserkennungs-Ergebnisinformationen des Ziel-Netzzugriffspunkts vor der vorangehenden Netzzugriffserkennung zu erhalten;
ein Analysemodul (101), das ausgelegt ist, die Netzzugriffserkennungs-Ergebnisinformationen zu analysieren, um zu ermitteln, ob der Ziel-Netzzugriffspunkt eine Netzzugriffsfähigkeit aufweist, durch Ermitteln, dass ein Prozentsatz von erfolgreichen Datensatzeinträgen in den Netzzugriffserkennungs-Ergebnisinformationen über einem voreingestellten Schwellenwert liegt; und
ein Erkennungsmodul (102), das ausgelegt ist: falls der Ziel-Netzzugriffspunkt die Netzzugriffsfähigkeit aufweist, automatisch auf den Ziel-Netzzugriffspunkt zuzugreifen und zu erkennen, ob der Ziel-Netzzugriffspunkt auf das Netz zugreifen kann.

7. Vorrichtung nach Anspruch 6, wobei die Netzzugriffsinformationen mindestens einen Netzzugriffserkennungs-Datensatzeintrag vor der vorangehenden Netzzugriffserkennung umfassen und der Netzzugriffserkennungs-Datensatzeintrag ein erfolgreicher Datensatzeintrag oder ein erfolgloser Datensatzeintrag ist.

8. Vorrichtung nach Anspruch 7, wobei das Analysemodul (101) umfasst:
eine Beurteilungseinheit (1010), die ausgelegt ist, zu ermitteln, ob die Netzzugriffsinformationen einen erfolglosen Datensatzeintrag umfassen; und
eine erste Ermittlungseinheit (1011), die ausgelegt ist: falls die Netzzugriffsinformationen keinen erfolglosen Datensatzeintrag umfassen, zu ermitteln, dass der Ziel-Netzzugriffspunkt die Netzzugriffsfähigkeit aufweist.

9. Vorrichtung nach Anspruch 8, wobei das Analysemodul (101) ferner umfasst:
eine Bezugseinheit (1012), die ausgelegt ist: falls die Netzzugriffsinformationen einen erfolglosen Datensatzeintrag umfassen, in den Netzzugriffsinformationen eine voreingestellte Menge von Netzzugriffserkennungs-Datensatzeinträgen zu erhalten, die der vorangehenden Netzzugriffserkennung benachbart sind; und
eine zweite Ermittlungseinheit (1013), die ausgelegt ist: falls die voreingestellte Menge von Netzzugriffserkennungs-Datensatzeinträgen alle erfolgreiche Datensatzeinträge sind, zu ermitteln, dass der Ziel-Netzzugriffspunkt die Netzzugriffsfähigkeit aufweist.

10. Vorrichtung nach Anspruch 9, wobei das Analysemodul (101) ferner umfasst:
eine Zähleinheit (1014), die ausgelegt ist: falls die voreingestellte Menge von Netzzugriffserkennungs-Datensatzeinträgen einen erfolglosen Datensatzeintrag umfasst, einen Prozentsatz eines erfolgreichen Datensatzeintrags in den Netzzugriffsinformationen zu zählen; und
eine dritte Ermittlungseinheit (1015), die ausgelegt ist: falls der Prozentsatz größer als ein voreingestellter Schwellenwert ist, zu ermitteln, dass der Ziel-Netzzugriffspunkt die Netzzugriffsfähigkeit aufweist.

11. Vorrichtung, die einen Prozessor (200), einen Speicher (202) und eine Netzwerkschnittstelle umfasst, wobei der Speicher (202) eine Programmcodegruppe speichert und der Prozessor (200) ausgelegt ist, den im Speicher (202) gespeicherten Programmcode aufzurufen, um das Verfahren nach einem der Ansprüche 1 bis 5 durchzuführen.

12. Computerlesbares Speichermedium, das Anweisungen umfasst, die, wenn sie von einem Computer ausgeführt werden, bewirken, dass der Computer das Verfahren nach einem der Ansprüche 1 bis 5 ausführt.

13. Computerprogrammprodukt, das ein nichtflüchtiges computerlesbares Medium umfasst, das computerausführbare Anweisungen speichert, die, wenn sie von einem Prozessor ausgeführt werden, den Prozessor anweisen, die Anweisungen auszuführen, um das Verfahren nach einem der Ansprüche 1 bis 5 auszuführen.

## Revendications

1. Procédé de traitement d'accès de réseau par un appareil de traitement d'accès de réseau, comprenant :
l'exécution d'une détection d'accès de réseau sur un AP cible comprenant la détermination pour savoir si l'AP cible est capable d'accéder au réseau ;
lorsqu'on détecte que le point d'accès de réseau cible ne peut pas accéder à un réseau dans la détection d'accès de réseau précédente qui est la plus proche d'un moment actuel, obtenir des informations de résultat de détection d'accès de réseau du point d'accès de réseau cible avant la détection d'accès de réseau précédente ;
l'analyse des informations de résultat de détection d'accès de réseau pour déterminer si le point d'accès de réseau cible présente une capacité d'accès de réseau en déterminant qu'un pourcentage des entrées d'enregistrement réussies dans les informations de résultat de détection d'accès de réseau se trouve au-dessus d'un seuil prédéfini ; et
si le point d'accès de réseau cible présente la capacité d'accès de réseau, accéder automatiquement au point d'accès de réseau cible, et détecter si le point d'accès de réseau cible peut accéder actuellement au réseau.

2. Procédé selon la revendication 1, dans lequel les informations d'accès de réseau comprennent au moins une entrée d'un enregistrement de détection d'accès de réseau avant la détection d'accès de réseau précédente, et l'entrée de l'enregistrement de détection d'accès de réseau est une entrée d'enregistrement réussie ou une entrée d'enregistrement non réussie.

3. Procédé selon la revendication 2, dans lequel l'analyse des informations d'accès de réseau pour déterminer si le point d'accès de réseau cible présente une capacité d'accès de réseau comprend :
la détermination pour savoir si les informations d'accès de réseau comprennent une entrée d'enregistrement non réussie ; et
si les informations d'accès de réseau ne comprennent pas d'entrée d'enregistrement non réussie, déterminer que le point d'accès de réseau cible présente la capacité d'accès de réseau.

4. Procédé selon la revendication 3, après la détermination pour savoir si les informations d'accès de réseau comprennent une entrée d'enregistrement non réussie, comprenant en outre :
si les informations d'accès de réseau comprennent une entrée d'enregistrement non réussie, obtenir, dans les informations d'accès de réseau, une quantité prédéfinie d'entrées d'enregistrement de détection d'accès de réseau qui sont adjacentes à la détection d'accès de réseau précédente ; et
si la quantité prédéfinie des entrées d'enregistrement de détection d'accès de réseau sont toutes des entrées d'enregistrement réussies, déterminer que le point d'accès de réseau cible présente la capacité d'accès de réseau.

5. Procédé selon la revendication 4, après l'obtention, dans les informations d'accès de réseau, d'une quantité prédéfinie d'entrées d'enregistrement de détection d'accès de réseau qui sont adjacentes à la détection d'accès de réseau précédente, comprenant en outre :
si la quantité prédéfinie des entrées d'enregistrement de détection d'accès de réseau comprend une entrée d'enregistrement non réussie, compter un pourcentage d'une entrée d'enregistrement réussie dans les informations d'accès de réseau ; et
si le pourcentage est supérieur à un seuil prédéfini, déterminer que le point d'accès de réseau cible présente la capacité d'accès de réseau.

6. Appareil de traitement d'accès de réseau, comprenant :
un module d'obtention (100), configuré pour : l'exécution d'une détection d'accès de réseau sur un AP cible comprenant la détermination pour savoir si l'AP cible est capable d'accéder au réseau ; et
lorsqu'on détecte que le point d'accès de réseau cible ne peut pas accéder à un réseau dans la détection d'accès de réseau précédente qui est la plus proche d'un moment actuel, obtenir des informations de résultat de détection d'accès de réseau du point d'accès de réseau cible avant la détection d'accès de réseau précédente ;
un module d'analyse (101), configuré pour analyser les informations de résultat de détection d'accès de réseau afin de déterminer si le point d'accès de réseau cible présente une capacité d'accès de réseau en déterminant qu'un pourcentage des entrées d'enregistrement réussies dans les informations de résultat de détection d'accès de réseau se trouve au-dessus d'un seuil prédéfini ; et
un module de détection (102), configuré pour : si le point d'accès de réseau cible présente la capacité d'accès de réseau, accéder automatiquement au point d'accès de réseau cible, et détecter si le point d'accès de réseau cible peut accéder actuellement au réseau.

7. Appareil selon la revendication 6, dans lequel les informations d'accès de réseau comprennent au moins une entrée d'un enregistrement de détection d'accès de réseau avant la détection d'accès de réseau précédente, et l'entrée de l'enregistrement de détection d'accès de réseau est une entrée d'enregistrement réussie ou une entrée d'enregistrement non réussie.

8. Appareil selon la revendication 7, dans lequel le module d'analyse (101) comprend :
une unité de jugement (1010), configurée pour déterminer si les informations d'accès de réseau comprennent une entrée d'enregistrement non réussie ; et
une première unité de détermination (1011), configurée pour: si les informations d'accès de réseau ne comprennent pas d'entrée d'enregistrement non réussie, déterminer que le point d'accès de réseau cible présente la capacité d'accès de réseau.

9. Appareil selon la revendication 8, dans lequel le module d'analyse (101) comprend en outre :
une unité d'obtention (1012), configurée pour : si les informations d'accès de réseau comprennent une entrée d'enregistrement non réussie, obtenir, dans les informations d'accès de réseau, une quantité prédéfinie d'entrées d'enregistrement de détection d'accès de réseau qui sont adjacentes à la détection d'accès de réseau précédente ; et
une seconde unité de détermination (1013), configurée pour : si la quantité prédéfinie des entrées d'enregistrement de détection d'accès de réseau sont toutes des entrées d'enregistrement réussies, déterminer que le point d'accès de réseau cible présente la capacité d'accès de réseau.

10. Appareil selon la revendication 9, dans lequel le module d'analyse (101) comprend en outre :
une unité de comptage (1014), configurée pour : si la quantité prédéfinie des entrées d'enregistrement de détection d'accès de réseau comprend une entrée d'enregistrement non réussie, compter un pourcentage d'une entrée d'enregistrement réussie dans les informations d'accès de réseau ; et
une troisième unité de détermination (1015), configurée pour : si le pourcentage est supérieur à un seuil prédéfini, déterminer que le point d'accès de réseau cible présente la capacité d'accès de réseau.

11. Appareil, comprenant un processeur (200), une mémoire (202) et une interface de réseau, dans lequel la mémoire (202) stocke un groupe de codes de programme, et le processeur (200) est configuré pour invoquer le code de programme stocké dans la mémoire (202), pour mettre en oeuvre le procédé selon l'une quelconque des revendications 1 à 5.

12. Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 5.

13. Produit de programme informatique comprenant un support lisible par ordinateur non transitoire stockant des instructions exécutables par ordinateur qui, lorsqu'elles sont exécutées par un processeur, donnent instruction au processeur d'exécuter les instructions pour mettre en oeuvre le procédé selon l'une quelconque des revendications 1 à 5.
